# EUROPÄISCHE PATENTSCHRIFT

(11) **EP 1 287 939 B1**
(45) Veröffentlichungstag und Bekanntmachung des Hinweises auf die Patenterteilung: **17.12.2003**
(21) Anmeldenummer: 02018843.9
(22) Anmeldetag: 23.08.2002
(51) Int. Cl.: B23K 11/31

(54) **Schweisszange**
Welding gun
Pistolet de soudage

(30) Priorität: 29.08.2001 DE 20113990 U
(43) Veröffentlichungstag der Anmeldung: 05.03.2003
(73) Patentinhaber: Reimer, Gerd, 86420 Diedorf (DE)
(72) Erfinder: Reimer, Gerd, 86420 Diedorf (DE)
(74) Vertreter: Ernicke, Klaus Stefan

(56) Entgegenhaltungen:
- US-A- 4 810 849
- US-A- 5 340 960
- US-A- 5 789 719
- US-A- 5 948 284
- PATENT ABSTRACTS OF JAPAN vol. 018, no. 009 (M-1538), 10. Januar 1994 (1994-01-10) -& JP 05 253676 A (OHARA KK), 5. Oktober 1993 (1993-10-05)

## Beschreibung

Die Erfindung betrifft eine Schweißzange, insbesondere eine Roboterschweißzange, mit den Merkmalen im Oberbegriff des Hauptanspruchs. Eine derartige Schweißzange ist aus der DE-A-40 08 088 bekannt.

Aus der US-A-5,789,719 ist eine andere Robotor schweißzange bekannt. Sie ist als C-Zange ausgebildet und besteht aus einem Gehäuse mit zwei relativ zueinander beweglichen und miteinander verbundenen Zangenarmen, die auf einem gemeinsamen Schlitten angeordnet sind und durch einen Zangenantrieb relativ zueinander bewegt werden. Die vorbekannte Roboterschweißzange besitzt außerdem eine Ausgleichseinrichtung für die Zangenarme und den Schlitten, die als mechanische Feder oder als Pneumatikzylinder ausgebildet ist und die für einen gleichmäßigen Anpressdruck beider Zangenarme und ihrer Elektroden am Werkstück sorgen soll. Die Ausgleichseinrichtung soll ferner den Schlitten und die Zangenarme mit den Elektroden nach dem Schweißen in die Ausgangsstellung zurückziehen. Je nach Arbeitsposition der Roboterschweißzange arbeitet die Ausgleichseinrichtung unterschiedlich, wodurch die Elektroden mit unterschiedlichen Kräften und Geschwindigkeiten und vor allem nicht gleichzeitig am zu schweißenden Bauteil ansetzen. Wenn die Roboterschweißzange horizontal angesetzt wird und der nur auf Druck belastete Pneumatikzylinder das Zangengewicht abstützen kann, ist die Ausgleichsfunktion gegeben. Ist jedoch die Roboterschweißzange in der Schweißposition vertikal hängend ausgerichtet, wirkt das Zangengewicht unter Umständen ziehend am Pneumatikzylinder, so dass die Ausgleichsfunktion nicht mehr gewährleistet ist. Hierdurch werden ungewollte Kräfte auf das zu schweißende Bauteil übertragen, die zu Deformationen und maßlichen Veränderungen führen können. Dies kann erhebliche Probleme zur Folge haben, was insbesondere im Automobilbau und bei den dort geforderten Qualitäten und Maßhaltigkeiten von Nachteil ist.

Aus der US-A-5,948,284 ist eine ähnliche stationäre Schweißzange für ein Vielpunkt-Werkzeug bekannt. Es sind lediglich Federn vorhanden, die durch eine Wippe in Schließstellung frei gegeben werden. Es ist jedoch kein selbsthemmender Ausgleichsantrieb vorhanden.

Die JP-A-05253676 offenbart eine Schweißzange mit einem Endlagenstopper, der in Verbindung mit dem Zangenantrieb die Zangenarme in der Öffnungsstellung der Schweißzange verriegelt und an einem stationären Stützbügel festhält. Der Endlagenstopper hat keine Ausgleichsfunktion. In der Schließstellung der Schweißzange ist der Stopper funktionslos und übt keine Kraft aus. Er wirkt außerdem nur in einer Richtung und ist nicht selbsthemmend. Der Endlagenstopper besitzt einen einseitig mit Druckmittel beaufschlagten Zylinder, der zwischen dem oberen Zangenarm und dem Stützbügel angeordnet ist, wobei die Kolbenstange gelenkig mit dem oberen Zangenarm verbunden ist. Die Druckkammer des Zylinders ist über eine Leitung mit einem Steuerventil an ein Druckmittelreservoir angeschlossen. Das Steuerventil regelt den Durchfluss in Abhängigkeit von der Schließstellung der Zangenarme mittels eines am zweiten Zangenarm anliegenden Steuerelements.

Die US-A-,810,849 offenbart eine Schweißzange mit zwei fluidischen Zylindern, welche in sich geschlossene Einheiten darstellen. Die Zylinder sind jeweils mit einem Ende an einer gemeinsamen stationären Basis abgestützt und greifen mit ihren anderen Enden an jeweils einem Zangenarm an. Durch diese Gestaltung bilden die Zylinder zwei gegenläufige hydraulische Drosseln, die die Öffnungs- und Schließgeschwindigkeit der Zangenarme beeinflussen. Dies ist kein Ausgleichsantrieb und hat auch keine Selbsthemmung.

Bei der US-A-5,340,960 wird ein Zangenausgleich bei einer C-Zange geschaffen, die mit einem elektrischen Servomotor und einer Antriebsspindel für den aktiven Zangenarm ausgerüstet ist. Der zweite Zangenarm ist mit dem Servomotor auf einem Schlitten gelagert, der gegenüber der Roboterhand unter Einwirkung einer mechanischen Feder verschieblich gelagert ist. Die Spindeldrehung wird über einen Riementrieb auf eine Gleitstange übertragen, die als Anschlag für den Schlitten dient. Der Schlitten ist somit zwischen der Feder und dem auf- und abbeweglichen Stangenende eingespannt.

Eine andere Roboterschweißzange ist aus der DE-A-40 08 088 bekannt. Sie ist als X-Zange ausgebildet und besitzt eine Ausgleichseinrichtung für den passiven Zangenarm, die als zweiseitig wirkender Pneumatikzylinder mit einem Kolben zwischen zwei Druckräumen ausgebildet ist. Die Druckräume werden von einer externen Druckmittelversorgung mittels eines Druckreglers in Abhängigkeit von der Zangenstellung beaufschlagt und kompensieren lageabhängig das Zangengewicht. Der Druckregler ist mit Hinblick auf die im Schweißprogramm vorkommenden Stellungen der Zangenanordnung programmiert und steuert entsprechend die Druckbeaufschlagung des Kolbens auf der einen oder anderen Kolbenseite. Die Ausgleichseinrichtung ist durch diese Gestaltung nicht selbsthemmend und erfordert einen hohen Bau- und Steueraufwand sowie eine externe Druckmittelversorgung.

Es ist Aufgabe der vorliegenden Erfindung, eine bessere Ausgleichseinrichtung aufzuzeigen.
Die Erfindung löst diese Aufgabe mit den Merkmalen im Hauptanspruch.

Der selbsthemmende Ausgleichsantrieb hat den Vorteil, dass er auf Zug und Druck gleichermaßen gut belastbar ist und seine eingestellte Position sicher hält. Seine Positionsvorgabe erhält der Ausgleichsantrieb vom Zangenantrieb oder von der aktiven Zangenarmbewegung. Hierdurch kann die Ausgleichseinrichtung in allen Stellungen der Schweißzange zuverlässig arbeiten und stets den gewünschten Gewichtsausgleich und Bewegungsausgleich für die Zangenarme bieten. Dieser Ausgleich ist außerdem in der gewünschten Weise in Abhängigkeit von der Zangenschließbewegung steuerbar und lässt sich exakt einstellen und einhalten.

Der Ausgleichsantrieb kann ein eigenständiger Antrieb mit eigenständiger Energieversorgung sein, der nur die Wegund Positionsvorgabe vom Zangenantrieb bzw. der aktiven Zangenarmbewegung über einen geeigneten Wegaufnehmer erhält. In der bevorzugten Ausführungsform ist jedoch der Aufnehmer derart als hydraulischer Zylinder, zug- und druckfester Bowdenzug oder dgl. ausgebildet, dass er für den Ausgleichsantrieb nicht nur die Weg- und Positionsvorgabe, sondern auch die Antriebsenergie zur Verfügung stellt. Vorzugsweise sind hierbei zwei hydraulische Zylinder direkt miteinander gekoppelt. Hierdurch schließen die beiden Zangenarme gleichzeitig, wobei auch deren Elektroden vorzugsweise gleichzeitig an dem zu schweißenden Bauteil auftreffen. Umgekehrt öffnen durch diese direkte Koppelung beide Zangenarme ebenfalls gleichzeitig.

Durch die quasi starre Koppelung der beiden Zylinder über die mit Öl, einer Emulsion oder einer anderen geeigneten imkompressiblen Flüssigkeit betriebene Hydraulik arbeitet die Ausgleichseinrichtung absolut unabhängig von der Arbeitsposition der Roboterschweißzange und dem Gewicht der Zangenarme. Außerdem werden durch das zwangsgesteuerte gleichzeitige Schließen der Zangenarme und ihrer Elektroden die unerwünschten Verformungskräfte auf das zu schweißende Bauteil weitgehend vermieden. Dies verbessert die Maßhaltigkeit und die Oberflächenqualität der zu verschweißenden Bauteile wesentlich. Der Roboter wird hierzu entsprechend genau positioniert bzw. in seiner Position oder Bahn programmiert. Die Positionierung oder Programmierung wird vorzugsweise so gewählt, dass der Abstand der Elektroden zum Bauteil im geöffnetem Zustand der Zangenarme bei allen zu schweißenden Punkten vorzugsweise gleich ist.

Die Ausgleichseinrichtung kann mit unterschiedlichen und einstellbaren Hüben und Kräften arbeiten. Eine Einstellmöglichkeit ist einerseits durch unterschiedliche Durchmesser der beiden hydraulischen Zylinder möglich. Hierbei ist der Antriebszylinder der Ausgleichseinrichtung vorzugsweise im Durchmesser größer als der Zylinder des Aufnehmers. Außerdem kann am Anschluss des Antriebszylinders am passiven Zangenarm eine Verstelleinrichtung vorhanden sein, die die Einstellung unterschiedlich großer Hebel und Antriebsmomente des Antriebszylinders ermöglicht.

Außerdem ist es von Vorteil, wenn die Ausgleichseinrichtung auch eine Federeinrichtung aufweist, mit der ein Hubausgleich zwischen den Hydraulikzylindern geschaffen werden kann. Dieser Hubausgleich kann unterschiedlich eingestellt werden, wobei sich die erforderliche Größe in der Praxis auch empirisch ermitteln lässt. Die Federeinrichtung kann ein- oder mehrseitig wirksam sein. Bei einer beidseitigen Ausführung lassen sich Zug- und Druckkräfte gleichermaßen elastisch aufnehmen. Sie ist insbesondere für X-Zangen von Vorteil.

Die Schweißzange ist für beliebige Handhabungseinrichtungen oder Manipulatoren geeignet. Besondere Vorteile bestehen beim Einsatz an mehrachsigen Industrierobotern, insbesondere mindestens sechsachsigen Schwenkarmrobotern. Die Einsatzbereiche und die Art der zu schweißenden Bauteile sind ebenfalls beliebig, wobei besondere Vorteile beim Einsatz im Rohbau von Fahrzeugkarosserien bestehen.

Ferner ist es von Vorteil, dass die Ausgleichseinrichtung unabhängig von der Art des Zangenantriebs ist und sich mit verschiedenen Zangenantrieben (Pneumatik- oder Hydraulikzylinder, Motor etc.) kombinieren und einsetzen lässt.

Bei Roboterschweißzangen ist es üblich, dass die Schweißzange vom Roboter aus gesteuert wird, wobei der motorische Zangenantrieb als Zusatzachse, insbesondere als siebte Achse eines sechsachsigen Industrieroboters betrachtet und gesteuert werden kann. Bei der bisher benutzten pneumatischen Ausgleichseinrichtung musste der Pneumatikzylinder separat gesteuert werden und wurde unter Umständen auch motorisch als achte Achse des Roboters oder mit einer zusätzlichen Steuerung gesteuert. Dies ist jedoch nicht in allen Fällen erwünscht, weil nicht jeder Roboter über eine Steuerungsmöglichkeit von acht Achsen verfügt. Die erfindungsgemäße Ausgleichseinrichtung in der bevorzugten Ausführung mit zwei Hydraulikzylindern oder Bowdenzug hat hierbei den Vorteil, dass die Ausgleichseinrichtung keine eigene und keine zusätzliche Steuerung braucht und im weiteren auch unabhängig von den Roboterachsen ist. Sie wird in dieser Ausführungsform lediglich über den Zangenantrieb positioniert und betätigt.

Die Ausgleichseinrichtung kann variiert und optimiert werden. Zur Vergleichmäßigung der umgepumpten Ölmengen ist es vorteilhaft, Zylinder mit durchgehenden Kolbenstangen zu verwenden, welche auch die Fluid befüllten Zylinderkammern durchsetzen. Für eine manuelle Einrichtung der Schweißzange und der Ausgleichseinrichtung ist es ferner vorteilhaft, wenn am Ausgleichsantrieb bzw. Antriebszylinder ein absperrbarer Bypass zwischen den dortigen Zylinderkammern vorhanden ist. Bei geöffnetem Bypass kann die Schweißzange zur Verschiebung des Nullpunktes manuell bewegt und insbesondere um das Drehgelenk der X-Zange gedreht werden. Dies ermöglicht eine optimale manuelle oder automatische Anpassung der Schweißzange an die erforderliche Arbeitsposition am Werkstück und deren Nachjustierung.

Ferner ist es vorteilhaft, den Aufnehmer bzw. Zylinder bei einer schwenkbaren X-Zange parallel zum Zangenantrieb und mit diesem auf gleichem Abstand zum Drehgelenk der Zangenarme zu positionieren. Hierbei wird der Aufnehmer bzw. Zylinder mit seiner Wirkachse seitlich und parallel zum Zangenantrieb angeordnet. Ferner ist es günstig, wenn die Fluidkreisläufe der Ausgleichsvorrichtung unter Vorspanndruck gesetzt werden. Hierdurch können etwaige lokale Druckschwankungen besser kompensiert werden. Die Betriebssicherheit wird vergrößert. Außerdem können für die verschiedenen Hydraulikkreise jeweils eigene Druckspeicher vorhanden sein, die einerseits den gewünschten Vorspanndruck im Leitungssystem aufrecht erhalten und andererseits bei Bedarf Fluid nachspeisen.

Weitere vorteilhafte Ausgestaltungen sind in den Unteransprüchen angegeben.

Die Erfindung ist in den Zeichnungen beispielsweise und schematisch dargestellt. Im einzelnen zeigen
- Figur 1:: eine Schweißzange in Form einer X-Zange mit einer Ausgleichseinrichtung in Seitenansicht,
- Figur 2:: eine Variante der Schweißzange in Form einer C-Zange mit Ausgleichseinrichtung in Seitenansicht,
- Figur 3:: eine vergrößerte und aufgebrochene Detaildarstellung einer Federeinrichtung,
- Figur 4:: eine Variante der X-Schweißzange von Figur 1 in Seitenansicht
- Figur. 5:: eine Draufsicht auf die abgewandelte X-Schweißzange von Figur 4 und
- Figur 6 bis 8:: eine Variante der Federeinrichtung in verschiedenen Betriebsstellungen.

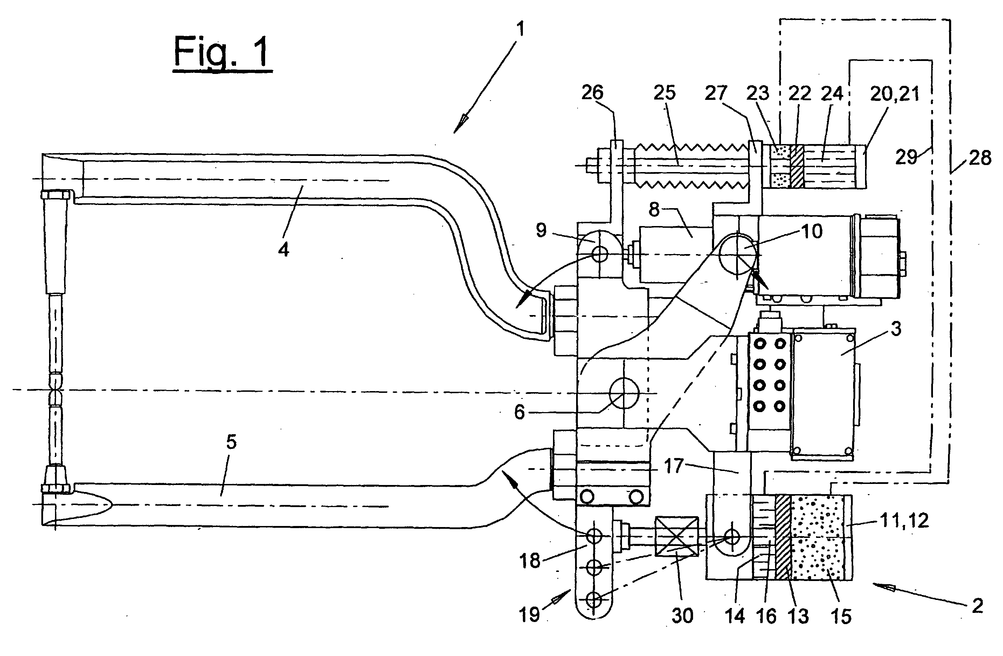

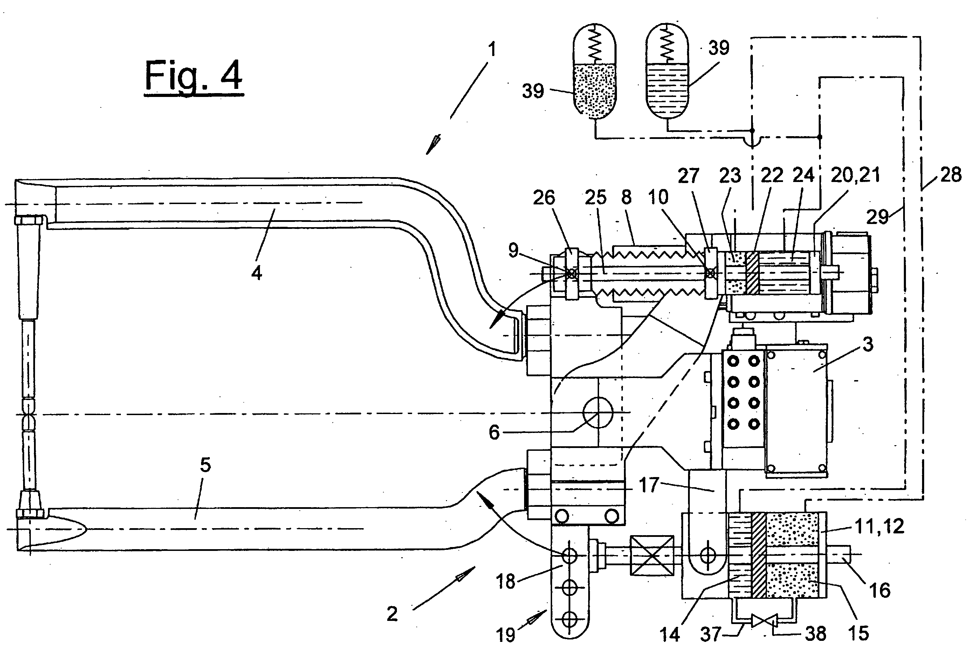

Figur 1 und 4 zeigen eine Roboterschweißzange (1) in Form einer sog. X-Zange oder Scherenzange. Die Roboterschweißzange (1) besitzt zwei Zangenarme (4,5), die einander scherenartig kreuzen und an einem Gelenk (6) drehbar miteinander verbunden sind. Das Gelenk (6) ist relativ ortsfest an einem Gehäuse (3) angeordnet, welches seinerseits über geeignete Anschlüsse (nicht dargestellt) mit einem Roboter (nicht dargestellt) verbunden ist. Der Roboter ist vorzugsweise als mehrachsiger Industrieroboter, insbesondere als sechsachsiger Schwenkarmroboter ausgebildet. Es kann sich aber auch um einen beliebigen anderen ein- oder mehrachsigen Manipulator handeln. In Abwandlung kann die Schweißzange (1) auch stationär angeordnet sein.

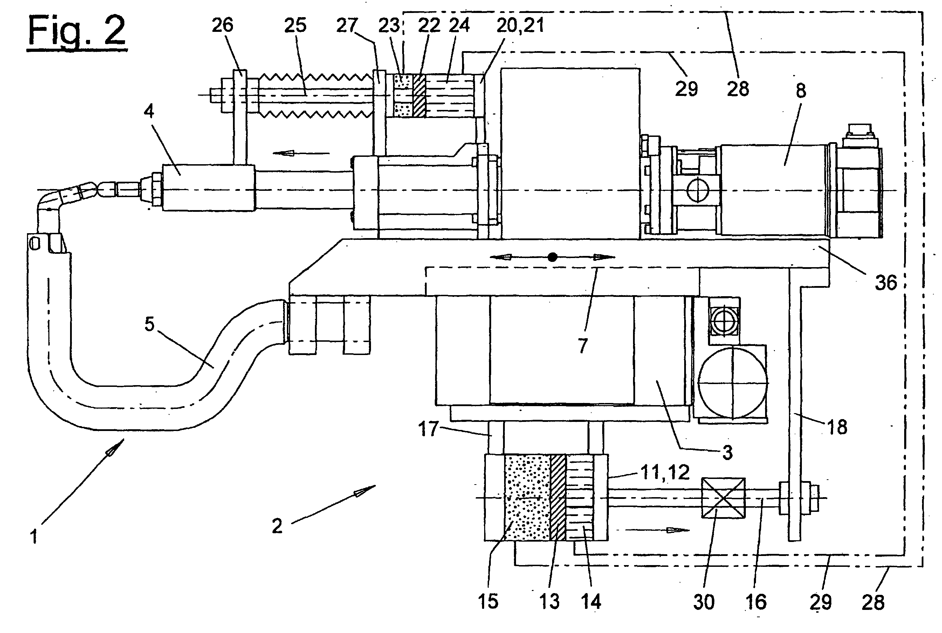

Die Zangenarme (4,5) werden durch einen Zangenantrieb (8) betätigt, der zwischen den gekreuzten hinteren Zangenarmenden (9,10) angeordnet ist und diese zur Betätigung der Schweißzange (1) spreizt. Bei der Spreizbewegung wenden die vorderen Zangenarmenden mit den dortigen Elektroden in einer Schwenkbewegung um das Gelenk (6) zusammengeführt und unter Aufbringung der gewünschten Elektrodenkraft auf dem zu schweißenden Bauteil (nicht dargestellt) geschlossen. Der Zangenantrieb (8) kann in beliebig geeigneter Weise ausgebildet sein. In der gezeigten Ausführungsform von Figur 1 ist er als pneumatischer Zylinder ausgebildet. Alternativ kann es sich auch gemäß der Variante von Figur 2 um einen elektromotorischen Antrieb, z.B. einen Spindelantrieb oder dergleichen handeln.

Die Roboterschweißzange (1) besitzt eine Ausgleichseinrichtung (2), die das Gewicht der nach vorne auskragenden Zangenarme (4,5) und der anderen beweglichen Grundzangenelemente aufnimmt und abstützt. Die Ausgleichseinrichtung (2) ist dabei gehäusefest abgestützt und mit dem einen sog. passiven Zangenarm (5) verbunden und dreht diesen um das Gelenk (6). Die Ausgleichseinrichtung (2) besitzt einen selbsthemmenden Ausgleichsantrieb (11), der in der bevorzugten Ausführungsform als hydraulischer Antriebszylinder (12) ausgebildet ist. Die Bewegungen des Ausgleichsantriebs (11) sind vom Zangenantrieb (8) oder von der Bewegung des aktiven Zangenarms (4) abgeleitet.

Die Ausgleichseinrichtung (2) besitzt einen mit dem Zangenantrieb (8) verbundenen Aufnehmer (20) für den Weg und vorzugsweise auch für die Kraft der Zangenarmbewegung. In der gezeigten Ausführungsform ist der Aufnehmer (20) als hydraulischer Zylinder (21) ausgebildet, dessen Kolbenstange (25) über eine Aufnahme (26) ggf. gelenkig mit dem hinteren Zangenarmende (9) des aktiven Zangenarms (4) und dessen Zylindermantel mit einer zweiten Aufnahme (27) mit dem Zangenantrieb (8) oder dem hinteren Zangenarmende (10) des passiven Zangenarms (5) ggf. ebenfalls gelenkig verbunden ist. Die Kolbenstange (25) ist von einem geeigneten Schutz gegen Schweißspritzer, z.B. einem Faltenbalg oder einer Manschette umgeben. Durch eine Spreizbewegung der Zangenarmenden (9,10) in der durch Pfeile in Figur 1 dargestellten Form wird die Kolbenstange (25) aus dem Zylinder (21) herausgezogen und der Kolben (22) im Zylinderinnenraum nach vorn bewegt.

Der hydraulische Zylinder (21) ist mittels Fluidleitungen (28,29) mit dem Antriebszylinder (12) verbunden. Bei der in Figur 1 dargestellten Ausführungsform sind die Leitungen (28,29) über Kreuz angeordnet, wobei die Leitung (28) von der vorderen oder ersten Zylinderkammer (23) des aufnehmenden Zylinders (21) zur hinteren zweiten Zylinderkammer (15) des Antriebszylinders (12) führt. Die zweite und hintere Zylinderkammer (24) des Zylinders (21) ist über die Fluidleitung (29) mit der ersten, vorderen Zylinderkammer (14) des Antriebszylinders (12) verbunden. Die beiden Zylinder (12,21) sind dadurch in einem geschlossenen hydraulischen Kreislauf miteinander verbunden. Sie sind mit einer geeigneten Hydraulikflüssigkeit befüllt. Dies kann ein Hydrauliköl, eine Emulsion oder ein sonstiges möglichst imkompressibles Fluid sein.

Für diese Hydraulik werden Zylinder, Schläuche, Verschraubungen und dergleichen andere Teile verwendet, die für geringst mögliche Leckverluste ausgelegt sind. Zum Nachfüllen von Hydraulikflüssigkeit und zum Entlüften des Hydrauliksystems wird die Schweißzange (1) in eine Null-Stellung gefahren, wobei die Entlüftung durch mehrere Zangenhübe und geeignete Entlüftungsvorrichtungen sichergestellt wird.,Das Einfüllen von Hydraulikflüssigkeit und das Entlüften kann an zwei Stellen im Hydrauliksystem an den jeweils höchsten Punkten erfolgen. Zur Kontrolle der Leckverluste fährt die Schweißzange (1) nach jedem Arbeitszyklus in die Null-Stellung, wobei die Zangenarme (4,5) maximal geöffnet werden. Diese Stellung wird durch zwei Näherungsinitiatoren oder Anschläge an den beiden Hydraulikzylindern überwacht.

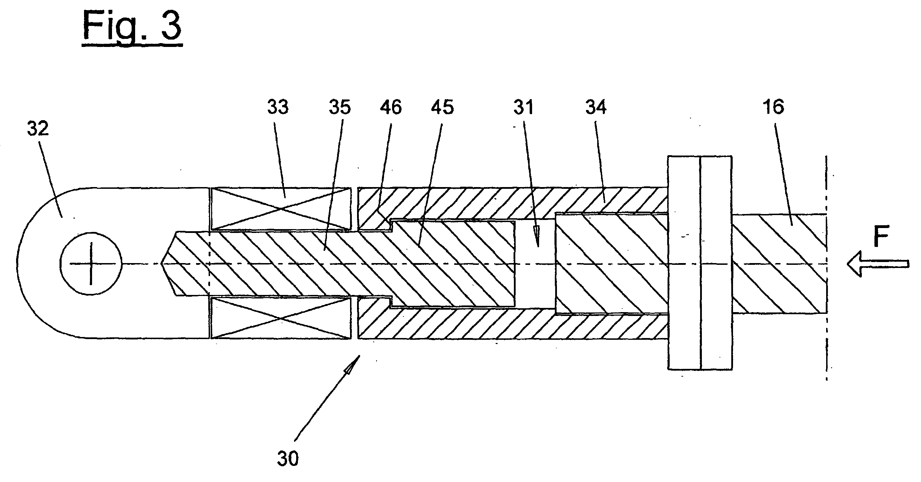

Der Antriebszylinder (12) ist mittels einer Abstützung (17) mit seinem Zylindermantel am Gehäuse (3) relativ ortsfest abgestützt. Seine Kolbenstange (16) ist über einen Anschluss (18) mit dem passiven Zangenarm (5) ggf. gelenkig verbunden, wobei die Verbindungsstelle einen Abstand und damit einen Hebelarm zum Zangengelenk (6) aufweist. Hierbei kann eine Verstelleinrichtung (19) vorhanden sein, die unterschiedliche Hebelverhältnisse bzw. Momente für die Ausgleichsbewegung einzustellen erlaubt. Dies kann z.B. ein Anschlussregister wie in Figur 1 sein. An der Kolbenstange (16) kann außerdem eine Federeinrichtung (30) angeordnet sein, auf die nachfolgend in Verbindung mit Figur 3 und 6 bis 8 noch näher eingegangen wird.

Bei der X-Zange von Figur 1 sind der aufnehmende Zylinder (21) und der Antriebszylinder (12) auf gegenüberliegenden Seiten des Zangengelenks (6) angeordnet. Bei der durch Pfeile angedeuteten Spreizbewegung der Zangenarmenden (9,10) und der entsprechenden Schließbewegung der Zange (1) wird am Ausgleichsantrieb (11) eine in Figur 1 linksdrehende Ausgleichs- oder Abstützbewegung erzeugt, mit der die gesamte Zangenanordnung (4,5), der Zangenantrieb (8) sowie der aufnehmende Zylinder (21) um das Gelenk (6) nach oben gedreht werden. Die Zangenarme (4,5) sind durch den Zangenantrieb (8) und den aufnehmenden Zylinder (21) fest miteinander verbunden, so dass die Zangenarme (4,5) miteinander eine quasi starre Einheit bilden, die vom Ausgleichsantrieb. (11) als Ganzes um das Gelenk (6) gedreht werden kann.

Wenn beim Schließen der Schweißzange (1) die Kolbenstange (25) des aufnehmenden Zylinders (21) herausgezogen wird, verdrängt der Kolben (22) die Hydraulikflüssigkeit aus der ersten Zylinderkammer (23) und pumpt sie in die hintere zweite Zylinderkammer des Antriebszylinders (12), wodurch dessen Kolbenstange (16) ebenfalls ausfährt. Das hierbei aus der ersten vorderen Zylinderkammer (14) verdrängte Hydrauliköl fließt über die Leitung (29) zurück in die hintere zweite Zylinderkammer (24) des aufnehmenden Zylinders (21).

Der Ausgleichshub kann auf verschiedene Weise gesteuert werden. Zum einen können die hydraulischen Zylinder (21,12) unterschiedliche Durchmesser haben, wodurch sich eine Weg- und Kraftübersetzung ergibt. Vorzugsweise ist der aufnehmende Zylinder (21) mit einem kleineren Durchmesser von Kolben (22) und Zylinderkammern (23,24) ausgestattet und hat hierfür einen längeren Hub. Dieser Hub entspricht vorzugsweise dem Gesamthub des Zangenantriebs (8). Der Antriebszylinder (12) hat dementsprechend einen größeren Kolben- und Kammerdurchmesser und führt einen kleineren Hub unter Erzeugung einer größeren Kraft aus. Die Volumina der Zylinderkammern sind dabei in der Summe zwischen den beiden Zylindern (21,12) gleich. Eine zweite Art der Hubbeeinflussung ist über die vorerwähnte Verstelleinrichtung (19) möglich, mit der der Hebelarm und das Moment der Ausgleichskraft verändert werden können. Alternativ oder zuätzlich können auch beliebige andere Übersetzungen, z.B. Lenkeranordnungen etc. verwendet werden.

Zum Schweißen wird der Roboter oder Manipulator in' geeigneter Weise in seinen Bewegungen und Positionen programmiert und zwar derart, dass bei der überlagerten Schließbewegung der Zangenarme (4,5) durch den Zangenantrieb (8) und der gleichzeitigen Ausgleichs- und Schwenkbewegung der Ausgleichseinrichtung (2) die Elektroden möglichst gleichzeitig auf das Bauteil treffen. Unter Umständen kann es hierbei auch eine Abwandlung geben, in dem eine der beiden Elektroden etwas früher,. z.B. mit einem Vorlauf von ca. 1 mm am zu schweißenden Bauteil auftrifft. Die Elektrode des passiven Zangenarms (5) sollte dabei mit engen Toleranzen im Bereich von ca.±1/2 mm für alle Punkte den gleichen Abstand zum Bauteil haben. Diese Anordnung hat auch Vorteile für den Elektrodenkappenfräser. Dieser wird durch das exakte gleichmäßige Schließen der Elektroden weniger belastet, was einerseits seine Lebensdauer erhöht und andererseits zu einem besseren Fräsergebnis führt.

Die Zangenarme (4,5) sollten so ausgeführt werden, dass keine großen Unterschiede beim Durchbiegen der Zangenarme und beim Kraftaufbau auftreten. Hierdurch wirken möglichst geringe Reaktionskräfte auf das zu schweißende Bauteil. Durch das im wesentlichen gleichzeitige Auftreffen der Elektroden auf das Bauteil werden die Reaktionskräfte bereits deutlich reduziert.

Figur 2 zeigt eine andere Roboterschweißzange (1) in Form einer sog. C-Zange. Hier schiebt der Zangenantrieb (8) den aktiven Zangenarm (4) mit seiner Elektrode linear und axial vor und zurück. Der Zangenantrieb (8) ist in der gezeigten Ausführungsform als elektromotorischer Antrieb, insbesondere als Spindelantrieb, ausgestaltet. Der Zangenantrieb (8) und der zweite passive Zangenarm (5) sind miteinander auf einem gemeinsamen Schlitten (36) gelagert, der über eine lineare Führung (7) am Zangengehäuse (3) translatorisch beweglich gehalten ist und mittels der Ausgleichseinrichtung (2) vor und zurück bewegt werden kann.

Die Ausgleichseinrichtung (2) ist in ähnlicher Weise wie in Figur 1 ausgebildet, wobei in Figur 2 einige Teile anders angeordnet sind. Die Kolbenstange (25) des aufnehmenden Zylinders (21) ist mit einer'ersten Aufnahme (26) am aktiven Zangenarm (4) befestigt, wobei das Zylindergehäuse über eine hintere Aufnahme (27) mit dem Zangenantrieb (8) oder dem Schlitten verbunden ist.

Der selbsthemmende Ausgleichsantrieb (11) ist wiederum als hydraulischer Antriebszylinder (12) ausgebildet, der in Figur 2 jedoch umgedreht angeordnet ist. Der Zylindermantel über eine Abstützung (17) mit dem Gehäuse (3) verbunden ist und die hier nach hinten ausfahrende Kolbenstange (16) ist über einen rückseitigen Anschluss (18) mit dem vorerwähnten Schlitten (36) verbunden. Eine Aus- oder Einfahrbewegung des Antriebszylinders (12) hat somit eine entsprechende Bewegung des gesamten Schlittens und der kompletten Zangenanordnung (4,5) nebst Zangenantrieb (8) zur Folge.

Bei dieser Ausführungsform sind die Kolbenstangenbewegungen der beiden Zylinder (21,12) entgegengerichtet. Wenn beim Ausfahren des aktiven Zangenarms (4) der Kolben (22) die Hydraulikflüssigkeit aus der vorderen ersten Zylinderkammer (23) des aufnehmenden Zylinders (21) verdrängt, wird diese über die Leitung (28) in die hintere zweite Zylinderkammer (15) des Antriebszylinders (12) gepumpt, was eine entgegengerichtete Ausfahrbewegung des Kolbens (13) zur Folge hat. Das Hydrauliköl aus der vorderen ersten Zylinderkammer (14) des Antriebszylinders (12) wird hierbei über die Leitung (29) in die hintere zweite Zylinderkammer (24) des aufnehmenden Zylinders (21) umgepumpt. Die entgegengesetzten Kolbenbewegungen sind durch Pfeile symbolisiert.

In beiden Ausführungsformen der Schweißzange (1) bewirkt der Ausgleichsantrieb (11) eine der Zustellbewegung des aktiven Zangenarms (4) entgegen gerichtete Schwenk- oder Verschiebebewegung der gesamten Zangenanordnung (4,5) nebst Zangenantrieb (8). Hierdurch wird auch der passive Zangenarm (5) an ,das zu schweißende Bauteil heranbewegt und durch die Überlagerung beider Bewegungen ein im wesentlichen gleichmäßiges Schließen beider Zangenarme (4,5) bzw. beider Elektroden erreicht. Über das gekoppelte Hydrauliksystem und die quasi starre Zylinderkopplung ist der Ausgleichsantrieb (11) selbsthemmend. Er kann sich nur bewegen, wenn der Zangenantrieb (8) sich bewegt und den aufnehmenden Zylinder (21) mitbewegt. Wenn hingegen der Zangenantrieb (8) steht, steht auch der Ausgleichsantrieb (11) und stützt die Zangenanordnung gegen alle äußeren Kräfte starr am Gehäuse (3) ab. Die Zangenarme (4,5) können sich dadurch nicht in irgendeiner Weise unerwünscht bewegen.

Bei der gezeigten Ausführungsform des Hydrauliksystems wird nicht nur der Weg, sondern auch die Kraft des Ausgleichsantriebs (11) vom Zangenantrieb (8) abgeleitet, indem dieser den aufnehmenden Zylinder (21) betätigt. Ansonsten wird die Elektrodenkraft nur durch den Zangenantrieb (8) erzeugt. Die Ausgleichseinrichtung (12) ist von der Elektrodenkraft entlastet und hat lediglich die Aufgabe, die ganze Zangenanordnung abzustützen und an das zu schweißende Bauteil heranzuführen.

Die Ausgleichseinrichtung (2) hat in den gezeigten Ausführungsformen eine Federeinrichtung (30), die in zwei Varianten in Figur 3 und 6 bis 8 näher dargestellt ist. Sie wird jeweils zwischen der Kolbenstange (16) des Antriebszylinders (12) und dem Zangenarm (5) bzw. dessen Anschluss (18) angeordnet.

Die in Figur 3 dargestellte Variante ist einseitig wirkend und nimmt Druckkräfte F federnd auf. Die Federeinrichtung (30) ist an der Kolbenstange (16) über eine Schraubverbindung mit einer gekonterten Schraubensicherung befestigt. Die Federeinrichtung (30) besteht aus einer auf das Kolbenstangenende aufgeschraubten Führungsbuchse (34), in deren innenliegendem Hohlraum ein Zapfen (35) längsbeweglich geführt ist und für den Hubausgleich einen Freiraum (31) zwischen dem Vorderende der Kolbenstange (16) und seinem hinteren Zapfenende hat. Der Zapfen (35) hat im hinteren Bereich einen verbreiterten Zapfenkopf (45), der mit seinem radial überstehenden Bund formschlüssig an'einer frontseitigen Ringschulter (46) der Führungsbuchse (34) anliegt. Der Zapfen (35) ist am vorderen Ende mit einem Lagerkopf (32) verbunden, insbesondere verschraubt, welcher seinerseits mit dem vorerwähnten Anschluss (18) für den passiven Zangenarm (5) verbunden ist. Zwischen dem Vorderende der Führungsbuchse (34) und dem verbreiterten Lagerkopf (32) ist ein Federelement (33) eingespannt, welches außerdem auf dem dünnen Zapfen (35) geführt ist. Das Federelement (33) kann z.B. als Gummifeder ausgebildet sein.

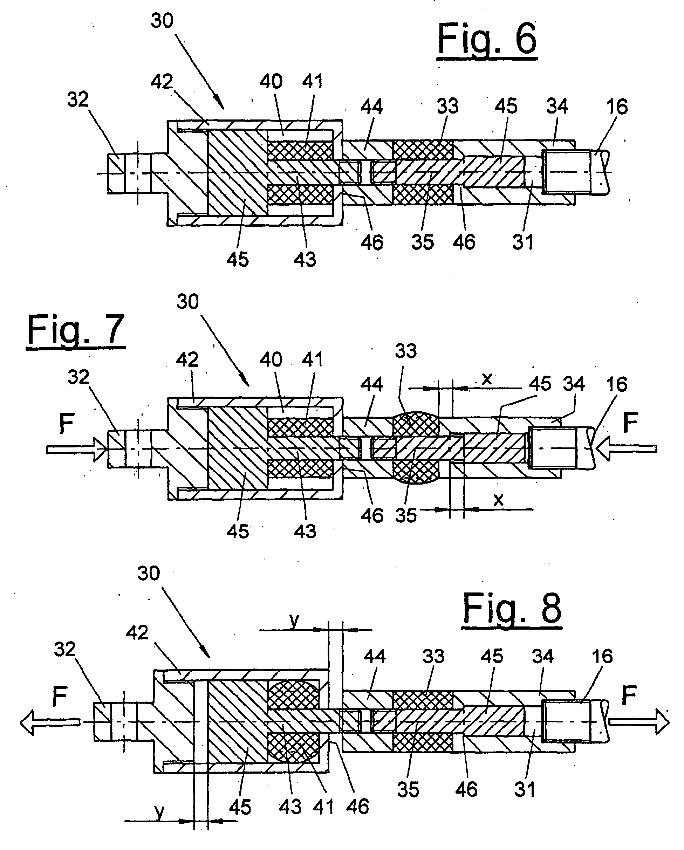

Figur 6 bis 8 zeigen ein beidseitig wirkendes Federelement (30), welches sowohl Zug- wie auch Druckkräfte elastisch aufnehmen kann. In Figur 6 ist das Federelement (30) in der ausgeglichenen Ruhestellung dargestellt. Figur 7 zeigt die Betriebsstellung unter Einwirkung von Druckkräften F und Figur 8 unter Einwirkung von Zugkräften F.

Bei dieser Variante hat das Federelement (30) die gleiche Führungsbuchse (34) mit Zapfen (35) und Federelement (33) wie in der vorbeschriebenen Ausführungsform von Figur 3. Konzentrisch zum Zapfen (35) ist ein zweiter Zapfen (43) angeordnet, der am rückwärtigen Ende ebenfalls einen verbreiterten Zapfenkopf (45) aufweist. Die beiden Zapfen (35, 43) sind mit ihren vorderen dünnen Enden über eine Verbindungshülse (44) direkt miteinander verbunden. Der Lagerkopf (32) ist bei dieser Bauform in eine zweite Führungsbuchse (42) rückseitig aufgeschraubt, welche in ihrem Hohlraum den zweiten Zapfen (43) mit seinem Zapfenkopf (45) aufnimmt. Auf dem dünnen Zapfen (43) ist ein zweites Federelement (41) aufgezogen, welches sich auf der linken Seite am Zapfenkopf (45) und auf der rechten Seite an einer nach innen vorspringenden Ringschulter (46) der zweiten Führungsbuchse (42) abstützt. Für das erste Federelement (33) bildet nun die fluchtend angeordnete Verbindungshülse (44) die Abstützung, welche ihrerseits auf der gegenüberliegenden Seite in Ruhestellung an der Aussenseite der zweiten Führungsbuchse (42) bzw. an deren Ringschulter (46) anliegt.

Figur 7 verdeutlicht die Betriebsstellung bei der Übertragung von Druckkräften F, die zum Beispiel von der Kolbenstange (16) eingeleitet werden und am Lagerkopf (32) bzw. dem dort angeschlossenen passiven Zangenarm (5) abgestützt werden. Das erste Federelement (33) wird von der Führungsbuchse oder Führungshülse (34) elastisch zusammengedrückt, wobei es sich über die Verbindungshülse (44) einer zweiten Führungsbuchse (42) und am dort eingeschraubten Lagerkopf (32) abstützt. Hierbei entsteht wie im Ausführungsbeispiel von Figur 3 ein Federweg x durch Verschiebung des Zapfens (35) in den Freiraum (31).

In Figur 8 ist die Betriebsstellung bei der Einwirkung von Zugkräften dargestellt, die zum Beispiel je nach Zangenorientierung vom passiven Zangenarm (5) über den Lagerkopf (32) eingeleitet werden. Am anderen Ende des Federelementes (30) hält die Ausgleichseinrichtung (2) mit der Kolbenstange (16) dagegen. In diesem Fall werden die Zugkräfte vom Lagerkopf (32) über die zweite Führungsbuchse (42) und deren nach innen vorspringende Ringschulter (46) auf das innen liegende zweite Federelement (41) übertragen, welches sich auf der anderen Seite am verbreiterten Zapfenkopf (45) abstützt. Der Zapfenkopf (45) und sein Zapfen (43) sind über die Verbindungshülse (44) starr mit dem ersten Zapfen (35) verbunden, welcher seinerseits bei der Einwirkung von Zugkräften mit seinem verbreiterten Zapfenkopf (45) an der Ringschulter (46) der ersten Führungshülse (34) anliegt und hierüber die Zugkräfte an der Kolbenstange (16) abstützt. Bei der Einwirkung von Zugkräften ergibt sich der Federweg y, wobei im Inneren der zweiten Führungsbuchse (42) der dortige Freiraum (40) beansprucht wird.

Die Federeinrichtung (30) dient zur Kompensation von Toleranzen am zu schweißenden Bauteil sowie von Toleranzen bei der Programmierung des Roboters und von Toleranzen durch unterschiedliche Durchbiegung der Zangenarme (4,5) bis zum Erreichen der gewünschten Elektrodenkraft. Die Art des Federelementes (33) und seine Federkraft bzw. Federkennlinie werden hierauf eingestellt. Eine Gummifeder hat hierbei gegenüber anderen möglichen Federelementen, z.B. Schraubenfedern, den Vorteil eines besseren Dämpfungs- bzw. Schwingungsverhaltens.

Bei der Betätigung der Ausgleichseinrichtung (11) und beim Ausfahren der Kolbenstange (16) drückt diese, nachdem die Elektroden am Bauteil anliegen, über die mitgeführte Führungsbuchse (34) auf das am Lagerkopf (32) abgestützte Federelement (33) und presst dieses so weit zusammen, bis die eingestellte Elektrodenkraft erreicht und die Durchbiegung der Zangenarme (4,5) kompensiert ist. Der maximal zulässige Hubausgleichsweg bzw. die Breite des Freiraums (31) können empirisch ermittelt werden. Die Federkraft des Federelementes (33) kann hierbei z.B. auch auf das abzustützende Gewicht der Zangenanordnung (4,5) ausgelegt sein, wobei das Federelement (30) so steif ist, dass es unter dem Gewicht der Zangenarme (4,5) und der anderen beweglichen Teile der Grundzange noch nicht nachgibt. Hierdurch werden auch unerwünschte Verformungen des zu schweißenden Bauteils vermieden.

Wenn umgekehrt beim Öffnen der Schweißzange (1) durch die entsprechende Rückfahrbewegung des Aufnehmers (20) bzw. Zylinders (21) die Kolbenstange (16) des Antriebszylinders (12) wieder eingefahren wird, nimmt die Führungsbuchse (34) über ihre Schulter den Zapfen (35) mit dem Lagerkopf (32) mit. Für die Begrenzung der Öffnungsbewegung der Zangenarme (4,5) kann im übrigen auch an geeigneter Stelle ein einstellbarer Anschlag vorhanden sein. Dieser ist vor allem bei Verwendung eines Zylinders für den Zangenantrieb (8) sinnvoll. Bei Einsatz eines elektromotorischen Antriebs kann hierauf verzichtet werden.

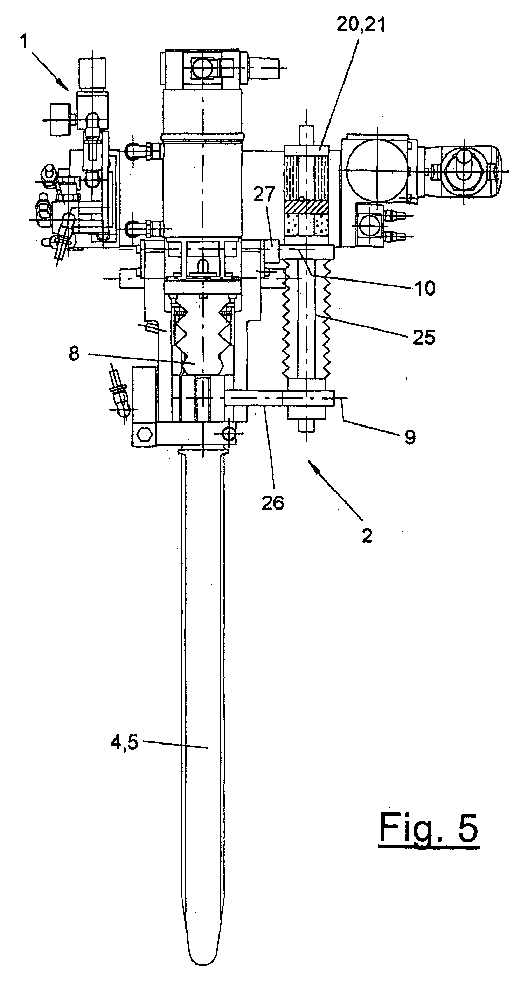

Figur 4 und 5 zeigen eine optimierte Variante der X-Schweißzange (1) von Figur 1 mit mehreren Detailabwandlungen.

Zum einen ist hier der Aufnehmer (20) seitlich neben dem Zangenantrieb (8) angeordnet, wobei sich die Wirkachse bzw. die Kolbenstange (25) parallel und auf gleicher Höhe zur Wirkachse des Zangenantriebs (8) befindet und den gleichen Abstand zum Gelenk (6) hat. Die Aufnahme (26) für die Kolbenstange (25) ist wie im ersten Ausführungsbeispiel in geeigneter Weise am vorderen Zangenende (9) bzw. dem dortigen Gelenk befestigt. Die hintere Aufnahme (27) für das Zylindergehäuse ist am anderen Zangenende (10) bzw. dem dortigen Gelenk befestigt. Sie kann alternativ auch mit dem Gehäuse des Zangenantriebs (8) verbunden sein. Diese Anordnung des Aufnehmers (20) bzw. Zylinders (21) ist kinematisch günstiger, weil hierdurch die Ausfahrlängen von Zangenantrieb (8) und Kolbenstange (25) identisch sind.

Eine weitere Abwandlung von Figur 4 betrifft die Gestaltung der Zylinder (12,21) und ihrer Kolbenstangen (16,25). Beide Zylinder (12,21) haben durchgehende Kolbenstangen (16,25), die sich durch die Kolben (13,22) und die Zylinderkammern (14,15,23,24) erstrecken. Vorzugsweise haben die Kolbenstangen (16,25) den gleichen Durchmesser. Diese Anordnung dient der Vergleichmäßigung der Zylinderfüllungen und der umgepumpten Ölmengen.

In einer weiteren Variante ist am Antriebszylinder (12) ein Bypass (37) angeordnet, welcher die beiden Zylinderkammern (14, 15) verbindet. Im Bypass (37) ist ein Absperrventil (38) angeordnet, mit dem der Bypass (37) vorzugsweise manuell oder gesteuert geöffnet und geschlossen werden kann. Durch den Bypass (37) ist es möglich, einen evtl. auftretenden Elektrodenversatz zu. kompensieren und die Elektroden bzw. die Zangenarme (4,5) in der Schließstellung in die korrekte Position oder sog. Null-Lage gegenüber dem Werkstück zu bringen. Bei geöffnetem Bypass (37) können die Zangenarme (4,5) mitsamt des Zangenantriebs (8) und des Aufnehmers (20) um das Gelenk (6) gedreht werden. Entsprechend der hierbei auftretenden Bewegung der Kolbenstange (16) und des Kolbens (13) wird Fluid zwischen den Zylinderkammern (14,15) über den Bypass (37) umgepumpt. Die korrekte Zangenstellung kann von Hand oder ggf. auch automatisch eingestellt werden. Sobald sie gefunden ist, wird das Sperrventil (38) geschlossen, so dass die Schweißzange (1) eingerichtet und fertig justiert ist. Die Zangenbewegungen im Schweißbetrieb erfolgen dann aus dieser eingerichteten Grundstellung heraus.

Eine ähnliche Verstellmöglichkeit mit schaltbarem Bypass ist bei entsprechend geänderter Ausbildung auch bei der in Figur 2 gezeigten C-Zange möglich.

Eine zusätzliche Abwandlung von Figur 4 betrifft die Anordnung von ein oder mehreren'Druckspeichern (39) an den Fluidleitungen (28,29). Das in der Ausgleichseinrichtung (2) zirkulierende Fluid, insbesondere Hydrauliköl, wird vorzugsweise unter einem Druck von mehreren bar vorgespannt. Die Druckspeicher sind mit Druck- oder Federelementen ausgestattet und halten diesen Fluiddruck im Leitungssystem aufrecht. Außerdem beinhalten sie eine Zusatzmenge an Fluid, die bei Druckabfall bzw. Fluidverlusten in das Leitungssystem eingespeist wird.

Abwandlungeh der gezeigten und beschriebenen Ausführungsform sind in verschiedener Weise möglich. In einer nicht dargestellten Variante von Figur 2 kann der Antriebszylinder (12) bei der C-Zange mit gleicher Ausrichtung wie in Figur 1 angeordnet sein. Bei dieser Variante zieht der Antriebszylinder (12) beim Schließen der Zangenarme (4,5) den Schlitten (36) durch eine Einfahrbewegung der Kolbenstange (16) an. Die Federeinrichtung (30) ist dabei entsprechend geändert

Ferner kann der selbsthemmende Ausgleichsantrieb (11) in anderer Weise ausgebildet sein. Er kann z.B. aus einem spielfreien Bowdenzug mit einer zug- und druckfesten Seele und einer stabilisierenden, endseitig abgestützen Hülle bestehen, der Zug- und Druckkräfte übertragen kann und der in der vorbeschriebenen Weise selbsthemmend ist. Der Bowdenzug ist mit dem Zangenantrieb (8) in ähnlicher Weise wie der aufnehmende Zylinder (21) verbunden und gegebenenfalls unter Einschaltung einer geeigneten Übersetzung unter relativ ortsfester Abstützung am Gehäuse (3) mit seiner ein- und ausfahrenden Seele mit dem Anschluss (18) des passiven Zangenarms (5) verbunden. Die Übersetzung kann z.B. ein Verzahnungsgetriebe sein, bei dem die Bewegungen des Bowdenzugs auf eine Zahnstange umgesetzt werden, welche über ein Zahnradgetriebe auf den Anschluss (18) geleitet wird. Daneben sind noch andere Varianten einer direkten Bewegungs- und Kraftübertragung vom Aufnehmer (20) auf den Ausgleichsantrieb (11) möglich.

Die Ausgleichseinrichtung (2) kann alternativ auch einen eigenständigen Ausgleichsantrieb (11) mit separater Energieversorgung haben, wobei der Aufnehmer (20) nur die Bewegungen des Zangenantriebs (8) über einen Wegaufnehmer oder dergleichen abgreift und hierüber unter Einschaltung einer geeigneten Übersetzung diesen separaten Ausgleichsantrieb (11) ansteuert. Der separate Ausgleichsantrieb (11) ist wiederum selbsthemmend und besteht z.B. aus einem geeigneten elektromotorischen Antrieb mit selbsthemmender Spindel oder dergleichen.

In weiterer Abwandlung kann die Schweißzange (1) in beliebig anderer Weise ausgebildet sein. Sie kann gegebenenfalls auch mehr als zwei Zangenarme (4,5) besitzen. Beliebig variabel ist auch der Zangenantrieb (8). Der Aufnehmer (20) kann ebenfalls abgewandelt werden. Bei Einsatz eines Bowdenzugs wird er durch das eine Bowdenzugende gebildet. Bei Verwendung eines separaten Ausgleichsantriebs (11) kann der Aufnehmer (20) als Potentiometer oder auch als inkrementaler, rotatorischer oder translatorischer Weggeber gestaltet sein.

### BEZUGSZEICHENLISTE

- 1: Schweißzange, Roboterschweißzange
- 2: Ausgleichseinrichtung
- 3: Gehäuse
- 4: Zangenarm aktiv
- 5: Zangenarm passiv
- 6: Gelenk
- 7: Führung
- 8: Zangenantrieb
- 9: Zangenende
- 10: Zangenende
- 11: Ausgleichsantrieb selbsthemmend
- 12: Zylinder, Antriebszylinder
- 13: Kolben
- 14: erste Zylinderkammer
- 15: zweite Zylinderkammer
- 16: Kolbenstange
- 17: Abstützung Gehäuse
- 18: Anschluss Zangenarm
- 19: Verstelleinrichtung
- 20: Aufnehmer
- 21: Zylinder
- 22: Kolben
- 23: erste Zylinderkammer
- 24: zweite Zylinderkammer
- 25: Kolbenstange
- 26: Aufnahme erster Zangenarm
- 27: Aufnahme zweiter Zangenarm
- 28: Leitung, Fluidleitung
- 29: Leitung, Fluidleitung
- 30: Federeinrichtung
- 31: Hubausgleich, Freiraum
- 32: Lagerkopf
- 33: Federelement, Gummifeder
- 34: Führungsbuchse
- 35: Zapfen
- 36: Schlitten
- 37: Bypass
- 38: Sperrventil
- 39: Druckspeicher
- 40: Hubausgleich, Freiraum
- 41: Federelement, Gummifeder
- 42: Führungsbuchse
- 43: Zapfen
- 44: Verbindungshülse
- 45: Zapfenkopf
- 46: Ringschulter

- x: Federweg
- y: Federweg

## Patentansprüche

1. Schweißzange, insbesondere Roboterschweißzange, mit einem Gehäuse (3), mehreren relativ zueinander beweglichen und miteinander verbundenen Zangenarmen (4,5), einem Zangenantrieb (8) und einer Ausgleichseinrichtung (2) für die Zangenarmbewegungen, **dadurch gekennzeichnet, dass** die Ausgleichseinrichtung (2) einen selbsthemmenden, hydraulisch oder per Bowdenzug oder elektromotorisch mit Spindel betätigten, Ausgleichsantrieb (11) aufweist, der mit mindestens einem Zangenarm (5) sowie dem Gehäuse (3) verbunden ist und die Zangenarme (4,5) entgegen der Schließrichtung des aktiven Zangenarms (4) bewegt, wobei die Bewegungen des Ausgleichsantriebs (11) vom Zangenantrieb (8) oder der aktiven Zangenarmbewegung abgeleitet sind.

2. Schweißzange nach Anspruch 1, **dadurch gekennzeichnet, dass** der Ausgleichsantrieb (11) mindestens einen hydraulischen Antriebszylinder (12) aufweist.

3. Schweißzange nach Anspruch 1 oder 2, **dadurch gekennzeichnet, dass** die Ausgleichseinrichtung (2) einen mit dem Zangenantrieb (8) verbundenen Aufnehmer (20) für den Weg und vorzugsweise auch die Kraft der Zangenarmbewegungen aufweist.

4. Schweißzange nach Anspruch 3, **dadurch gekennzeichnet, dass** der Aufnehmer (20) als hydraulischer Zylinder (21) ausgebildet ist, der mit dem aktiven Zangenarm (4) und dem Zangenantrieb (8) verbunden ist und dessen Zylinderkammern (23,24) mittels Fluidleitungen (28,29) derart mit den Zylinderkammern (14,15) des Antriebszylinders (12) verbunden sind, dass eine entgegegerichtete Ausgleichsbewegung erzeugt wird.

5. Schweißzange nach einem der vorhergehenden Ansprüche, **dadurch gekennzeichnet, dass** die Schweißzange (1) als X-Zange mit zwei gekreuzten und über ein gehäusefestes Gelenk (6) drehbar miteinander verbundenen Zangenarmen (4,5) ausgebildet ist, wobei der Zangenantrieb (8) und der Aufnehmer (20) zwischen den Zangenenden (9,10) angeordnet sind und der Ausgleichsantrieb (11) am passiven Zangenarm (5) mit Abstand zum Gelenk (6) angreift, wobei der Aufnehmer (20) vorzugsweise seitlich parallel und mit seiner Wirkachse (25) auf gleicher Höhe zum Zangenantrieb (8) angeordnet ist.

6. Schweißzange nach einem der Ansprüche 1 bis 4, **dadurch gekennzeichnet, dass** die Schweißzange (1) als C-Zange mit zwei verschieblich miteinander verbundenen Zangenarmen (4,5) ausgebildet ist, wobei die Zangenarme (4,5) und der Zangenantrieb (8) über eine translatorische Führung (7) verschieblich am Gehäuse (3) gelagert sind und wobei der Aufnehmer (20) zwischen dem Zangenantrieb (8) und dem aktiven Zangenarm (4) angeordnet ist und der Ausgleichsantrieb (11) mit dem Gehäuse (3) und der Führung (7) verbunden ist.

7. Schweißzange nach einem der vorhergehenden Ansprüche, **dadurch gekennzeichnet, dass** die Zylinder (11,21) durchgehende Kolbenstangen aufweisen.

8. Schweißzange nach einem der vorhergehenden Ansprüche, **dadurch gekennzeichnet, dass** die Ausgleichseinrichtung (2) eine Federeinrichtung (30) aufweist, wobei die Federeinrichtung (30) vorzugsweise beidseitig wirkend und auf Zug und Druck belastbar ist.

9. Schweißzange nach einem der vorhergehenden Ansprüche, **dadurch gekennzeichnet, dass** der Antriebszylinder (12) einen verschließbaren Bypass (37) zwischen seinen Zylinderkammern (14,15) aufweist.

10. Schweißzange nach einem der vorhergehenden Ansprüche, **dadurch gekennzeichnet, dass** die Ausgleichseinrichtung (2) mindesten einen vorgespannten Ölkreislauf mit mindesten einem Druckspeicher (39) aufweist.

## Claims

1. Welding tongs, in particular robot welding tongs, with a housing (3), a number of tongs arms (4, 5) which are movable in relation to one another and are connected to one another, a tongs drive (8) and a compensating device (2) for the movements of the tongs arms, **characterized in that** the compensating device (2) has a self-locking compensating drive (11), which is actuated hydraulically or by a Bowden cable or electromotively by a spindle, is connected to at least one tongs arm (5) and the housing (3) and moves the tongs arms (4, 5) counter to the closing direction of the active tongs arm (4), the movements of the compensating drive (11) being derived from the tongs drive (8) or the movement of the active tongs arm.

2. Welding tongs according to Claim 1, **characterized in that** the compensating drive (11) has at least one hydraulic drive cylinder (12).

3. Welding tongs according to Claim 1 or 2, **characterized in that** the compensating device (2) has a pickup (20), connected to the tongs drive (8), for the displacement and preferably also the force of the movements of the tongs arms.

4. Welding tongs according to Claim 3, **characterized in that** the pickup (20) is formed as a hydraulic cylinder (21), which is connected to the active tongs arm (4) and the tongs drive (8) and the cylinder chambers (23, 24) of which are connected by means of fluid lines (28, 29) to the cylinder chambers (14, 15) of the drive cylinder (12) in such a way that an opposing compensating movement is produced.

5. Welding tongs according to one of the preceding claims, **characterized in that** the welding tongs (1) are formed as X-tongs with two tongs arms (4, 5) which are crossed and pivotably connected to each other by means of a joint (6) fixed to the housing, the tongs drive (8) and the pickup (20) being arranged between the ends of the tongs (9, 10), and the compensating drive (11) acting on the passive tongs arm (5) at a distance from the joint (6), the pickup (20) preferably being arranged laterally parallel to and with its operative axis (25) at the same height as the tongs drive (8).

6. Welding tongs according to one of Claims 1 to 4, **characterized in that** the welding tongs (1) are formed as C-tongs with two tongs arms (4, 5) displaceably connected to each other, the tongs arms (4, 5) and the tongs drive (8) being mounted displaceably on the housing (3) by means of a translatory guide (7), and the pickup (20) being arranged between the tongs drive (8) and the active tongs arm (4), and the compensating drive (11) being connected to the housing (3) and the guide (7) .

7. Welding tongs according to one of the preceding claims, **characterized in that** the cylinders (11, 21) have continuous piston rods.

8. Welding tongs according to one of the preceding claims, **characterized in that** the compensating device (2) has a spring device (30), the spring device (30) preferably being operative on both sides and able to undergo tensile and compressive loading.

9. Welding tongs according to one of the preceding claims, **characterized in that** the drive cylinder (12) has a closable bypass (37) between its cylinder chambers (14, 15).

10. Welding tongs according to one of the preceding claims, **characterized in that** the compensating device (2) has at least one pressurized oil circuit with at least one pressure accumulator (39).

## Revendications

1. Pince de soudage, en particulier pince de soudage de robot, comprenant un boîtier (3), plusieurs bras de pince (4, 5) déplaçables les uns par rapport aux autres et connectés entre eux, un entraînement de pince (8) et un dispositif d'équilibrage (2) pour les déplacements des bras de pince, **caractérisée en ce que** le dispositif d'équilibrage (2) présente une commande d'équilibrage (11) auto-bloquante, actionnée hydrauliquement ou par un câble Bowden, ou par un moteur électrique avec une broche, laquelle est connectée à au moins un bras de pince (5) ainsi qu'au boîtier (3) et déplace les bras de pince (4, 5) à l'encontre du sens de fermeture du bras de pince actif (4), les déplacements de l'entraînement d'équilibrage (11) étant dérivés de l'entraînement de pince (8) ou du déplacement du bras de pince actif.

2. Pince de soudage selon la revendication 1, **caractérisée en ce que** l'entraînement d'équilibrage (11) présente au moins un cylindre d'entraînement hydraulique (12).

3. Pince de soudage selon la revendication 1 ou 2, **caractérisée en ce que** le dispositif d'équilibrage (2) présente un capteur (20) connecté à l'entraînement de pince (8) pour la course et de préférence également la force des déplacements des bras de pince.

4. Pince de soudage selon la revendication 3, **caractérisée en ce que** le capteur (20) est réalisé sous la forme d'un cylindre hydraulique (21) qui est connecté au bras de pince actif (4) et à l'entraînement de pince (8) et dont les chambres de cylindre (23, 24) sont connectées au moyen de conduites fluidiques (28, 29) aux chambres de cylindres (14, 15) du cylindre d'entraînement (12) de telle sorte qu'il se produise un déplacement d'équilibrage en sens inverse.

5. Pince de soudage selon l'une quelconque des revendications précédentes, **caractérisée en ce que** la pince de soudage (1) est réalisée sous forme d'une pince en X avec deux bras de pince (4, 5) croisés et connectés à rotation l'un à l'autre par le biais d'une articulation fixée au boîtier (6), l'entraînement de pince (8) et le capteur (20) étant disposés entre les extrémités des pinces (9, 10) et l'entraînement d'équilibrage (11) venant en prise sur le bras de pince passif (5) à distance de l'articulation (6), le capteur (20) étant disposé de préférence latéralement et parallèlement et avec son axe fonctionnel (25) à la même hauteur que l'entraînement de pince (8).

6. Pince de soudage selon l'une quelconque des revendications 1 à 4, **caractérisée en ce que** la pince de soudage (1) est réalisée sous forme d'une pince en C avec deux bras de pince (4, 5) connectés de manière déplaçable l'un à l'autre, les bras de pince (4, 5) et l'entraînement de pince (8) étant montés de manière déplaçable sur le boîtier (3) par le biais d'une coulisse (7) à translation et le capteur (20) étant disposé entre l'entraînement de pince (8) et le bras de pince actif (4) et l'entraînement d'équilibrage (11) étant connecté au boîtier (3) et à la coulisse (7).

7. Pince de soudage selon l'une quelconque des revendications précédentes, **caractérisée en ce que** les cylindres (11, 21) présentent des tiges de piston les traversant.

8. Pince de soudage selon l'une quelconque des revendications précédentes, **caractérisée en ce que** le dispositif d'équilibrage (2) présente un dispositif à ressort (30), le dispositif à ressort (30) pouvant être chargé en traction et en pression en agissant de préférence des deux côtés.

9. Pince de soudage selon l'une quelconque des revendications précédentes, **caractérisée en ce que** le cylindre d'entraînement (12) présente une dérivation (37) pouvant être fermée, entre ses chambres de cylindre (14, 15).

10. Pince de soudage selon l'une quelconque des revendications précédentes, **caractérisée en ce que** le dispositif d'équilibrage (2) présente au moins un circuit d'huile précontraint avec au moins un accumulateur de pression (39).
